Europäisches Patentamt

European Patent Office

Office européen des brevets

(19)

(11) Numéro de publication : **0 285 508 B1**

(12) # FASCICULE DE BREVET EUROPEEN

(45) Date de publication du fascicule du brevet :
18.09.91 Bulletin 91/38

(51) Int. Cl.⁵ : **F16H 61/16**

(21) Numéro de dépôt : **88400735.2**

(22) Date de dépôt : **25.03.88**

(54) Dispositif de commande manuelle d'une boîte de vitesses mécanique.

(30) Priorité : **27.03.87 FR 8704263**

(43) Date de publication de la demande :
**05.10.88 Bulletin 88/40**

(45) Mention de la délivrance du brevet :
**18.09.91 Bulletin 91/38**

(84) Etats contractants désignés :
**BE DE ES GB IT NL SE**

(56) Documents cités :
**EP-A- 0 072 464**
**DE-A- 2 062 642**
**DE-A- 2 460 769**
**FR-A- 2 074 826**
**FR-A- 2 361 237**

(73) Titulaire : **REGIE NATIONALE DES USINES RENAULT**
**Boîte postale 103 8-10 avenue Emile Zola**
**F-92109 Boulogne-Billancourt (FR)**

(72) Inventeur : **Deschamps, Benoit**
**135, rue Danton**
**F-92500 Rueil-Malmaison (FR)**
Inventeur : **Chopineau, Gérard**
**73 bis, rue Edouard-Vaillant**
**F-95870 Bezons (FR)**

(74) Mandataire : **Ernst-Schonberg, Michel et al**
**REGIE NATIONALE DES USINES RENAULT (S.**
**0267) 8 & 10, avenue Emile Zola**
**F-92109 Boulogne Billancourt Cédex (FR)**

EP 0 285 508 B1

## Description

La présente invention se rapporte à un dispositif de commande manuelle d'une boîte de vitesses mécanique, qui s'applique notamment sur les véhicules automobiles.

L'invention porte sur une commande analogue à celle décrite dans la demande de brevet européen EP-A-0072464 de la demanderesse qui est représentée schématiquement en perspective sur la figure 1.

Un levier de vitesses 1 est monté sur un boîtier 7 par l'intermédiaire d'un point d'articulation fixé 2 matérialisé par une rotule 11. Le boîtier 7 est lui-même fixé sur le plancher du véhicule. Afin de pouvoir résoudre les problèmes de bruyance tels que le grésillement, un tampon filtrant 30 de faible raideur est interposé entre le boîtier 7 et la rotule 11.

Dans ce type de commande, la grille des différents rapports a une ligne de sélection en marche arrière qui est voisine de la ligne de sélection du premier et du deuxième rapport.

Lorsque le pilotage des lignes de sélection du premier et du deuxième rapport et de la marche arrière est prévu au boîtier, il est nécessaire de réaliser un réglage précis en chaîne de montage sur l'assemblage complexe des différentes pièces concernées afin de matérialiser correctement lesdites lignes de sélection, pour éviter au conducteur toute fausse manoeuvre entre la marche arrière et le premier et le deuxième rapport.

De plus, la présence nécessaire du tampon filtrant peut entraîner un écrasement de celui-ci, lors d'une manoeuvre trop brutale en sélection, avec comme conséquence un passage possible en marche arrière en lieu et place du rapport de marche avant.

Le but de la présente invention est de proposer une commande externe de boîte de vitesses mécanique qui garantisse contre tout passage intempestif de marche arrière en lieu et place du rapport de marche avant, et cela quelle que soit la manière de changer de vitesse du conducteur. De plus, cette commande doit permettre un montage aisé en chaîne de fabrication sans aucun réglage précis.

A cet effet, le dispositif de commande manuelle des rapports d'une boîte de vitesses mécanique selon l'invention comporte un levier de vitesses à actionnement manuel muni d'un point d'articulation fixe, les positions respectives de chaque vitesse étant agencées de manière que la ligne de sélection de marche arrière soit à côté de la ligne de sélection du premier et du deuxième rapport. Ledit levier actionne une seule bielle de commande pour la sélection et le passage des différents rapports. Le pilotage de la ligne de sélection du premier et du deuxième rapport est effectué par des moyens de butée situés au-dessous du point d'articulation et par des moyens de butée situés au-dessus du point d'articulation. Lesdits moyens sont liés par l'intermédiaire d'un système de commande en translation le long du levier de vitesses de manière à escamoter lesdits moyens de butée pour permettre d'atteindre la ligne de sélection de la marche arrière.

Selon un mode de réalisation de l'invention :
— les moyens de butée situés au-dessus du point d'articulation consistent en une butée supérieure montée sur le levier de vitesses qui coopère avec une rampe supérieure solidaire du boîtier ;
— les moyens de butée situés au-dessous du point d'articulation consistent en une butée inférieure montée sur le levier de vitesses qui coopère avec une rampe inférieure solidaire du boîtier ;
— la butée inférieure étant liée à la butée supérieure par un câble traversant le support de rotule du point d'articulation ; l'ensemble étant manoeuvré en translation le long du levier de vitesses par une gâchette solidaire de ladite butée supérieure, et étant rappelé en position initiale par un système élastique aménagé sur la butée inférieure ; les deux mouvements de translation étant guidés et limités par des moyens de fin de course.

Selon un mode de réalisation de l'invention, la butée supérieure est constituée par un corps solidaire de la gâchette, ledit corps ayant une gorge dans laquelle est logé un élément torique en élastomère qui vient buter contre la rampe supérieure, ledit corps portant un crochet sur lequel vient se fixer l'extrémité supérieure du câble.

Selon un mode de réalisation de l'invention, la butée inférieure est constituée d'un corps cylindrique qui porte un anneau, l'extrémité inférieure du câble venant s'amarrer dans ledit corps ; les moyens élastiques étant constitués par un ressort de compression qui est monté autour dudit corps, et qui s'appuie, d'une part, sur ledit anneau et, d'autre part, sur une goupille montée dans le levier de vitesses et coulissant dans deux lumières aménagées dans le corps et diamétralement opposées afin de guider le corps en translation.

Selon un mode de réalisation de l'invention, les moyens de fin de course étant assurés par une goupille de liaison de la gâchette avec le levier de vitesses, ladite goupille étant montée dans ledit levier de vitesses et coulissant dans deux lumières aménagées dans ladite gâchette et diamétralement opposées afin de guider en translation la butée supérieure.

Selon un mode de réalisation de l'invention, le corps et la gâchette forment une pièce monobloc en matière plastique.

Selon un mode de réalisation de l'invention, le corps de la butée inférieure est constitué de deux éléments en matière plastique qui se clipsent l'un dans l'autre, l'ensemble des deux éléments étant tenu par l'anneau en élastomère qui vient se loger dans une gorge prévue à cet effet dans lesdits deux éléments.

Selon un mode de réalisation de l'invention, l'ensemble des pièces situées au-dessous du point d'articulation est muni d'un soufflet de protection qui vient se monter, d'une part, sur la partie inférieure du corps avec sa gorge sur laquelle vient se monter l'anneau en élastomère et, d'autre part, entre le tampon filtrant du point d'articulation et un anneau d'arrêt de l'ensemble de ladite articulation dans le boîtier du levier de vitesses.

Le dispositif de commande manuelle selon l'invention présente ainsi l'avantage de neutraliser l'action du tampon filtrant en cas de manoeuvre brutale en sélection du conducteur. De plus, l'interaction des butées supérieure et inférieure permet de n'avoir qu'un réglage très facile en chaîne avec un jeu admissible beaucoup plus grand.

D'autres caractéristiques et avantages de la présente invention ressortiront de la description qui suit le mode de réalisation donné à titre d'exemple en référence aux dessins annexés sur lesquels :

— la figure 1 est une vue schématique en perspective de l'ensemble de la commande manuelle avec sa tringlerie sur laquelle porte le dispositif de l'invention ;

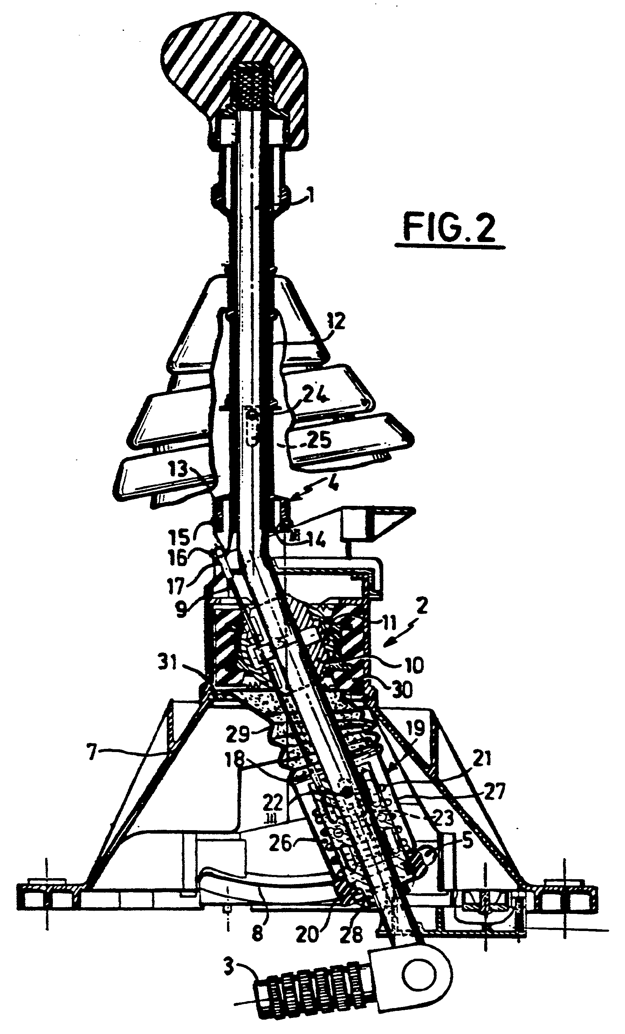

— la figure 2 est une coupe axiale du dispositif selon l'invention dans le plan longitudinal du véhicule ;

— la figure 3 est une vue suivant III-III de la figure 2, avec le boîtier en coupe.

Le dispositif de commande manuelle des rapports d'une boîte de vitesses mécanique selon l'invention comporte un levier de vitesses 1 à actionnement manuel, qui est muni d'un point d'articulation fixe référencé 2 dans son ensemble et qui est porté par un boîtier 7. Le levier de vitesses 1 actionne une seule bielle de commande 3 disposée sensiblement selon la direction longitudinale du véhicule. Le levier de vitesses 1 est sensiblement vertical, tandis que la bielle de commande 3 est sensiblement horizontale. La bielle de commande 3 actionne à son tour une biellette de commande 32 fixée sur la boîte de vitesses. La commande des vitesses à l'intérieur de la boîte de vitesses se fait au moyen d'un doigt de passage 33 lié rigidement à un axe de commande 34. Le déplacement en translation de l'axe de commande 34 portant le doigt de passage 33 permet le choix des lignes de sélection, tandis que la rotation de l'axe de commande 34 entraînant en rotation le doigt de passage 33 permet le passage d'un rapport de la boîte de vitesses donné dans la ligne de sélection choisie. Ces différents mouvements sont commandés par un levier de sortie 35 fixé par une articulation en un point déterminé de la biellette de commande 32. Le doigt de passage 33 agit sur un crabot 36 correspondant à la ligne de sélection choisie afin de déplacer une fourchette 38 par l'intermédiaire de son axe 37 pour obtenir le rapport désiré.

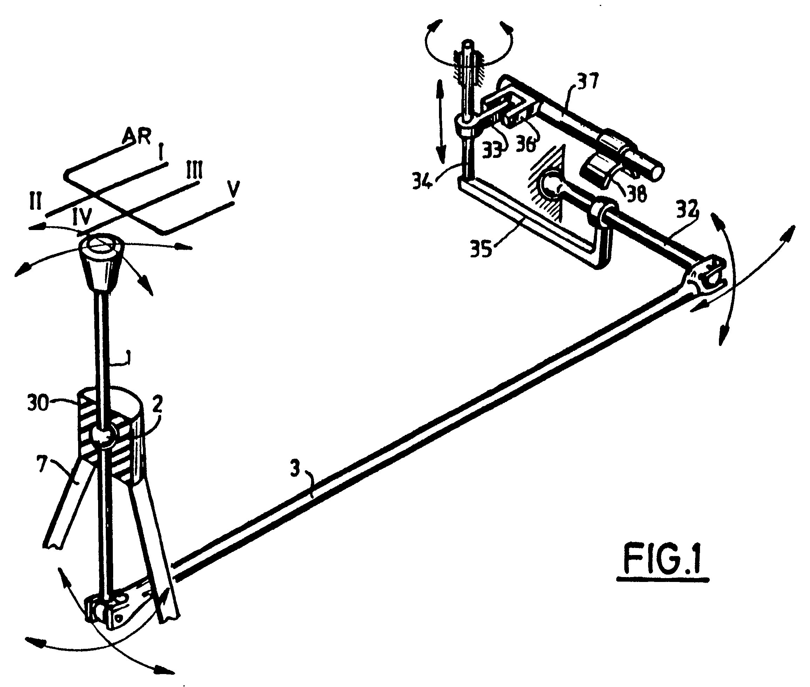

Les positions respectives de chaque vitesse sont agencées selon la grille représentée schématiquement en perspective sur la figure 1. Il y a quatre lignes de sélection qui sont, en allant de gauche à droite pour le conducteur, la ligne de sélection de marche arrière référencée AR, la ligne de sélection du premier et du deuxième rapport référencée I-II, la ligne du troisième et du quatrième rapport référencée III-IV, et la ligne du cinquième rapport référencée V.

Le pilotage de la ligne de sélection du premier et du deuxième rapport 1-2 s'effectue dans le boîtier 7 ainsi que le pilotage de la ligne de sélection de la marche arrière AR.

Le pilotage de la ligne de sélection 1-2 est réalisé par des moyens de butée situés au-dessus du point d'articulation 2 et par des moyens de butée situés au-dessous du point d'articulation 2. Un système de commande en translation, le long du levier de vitesses 1 relie ces différents moyens de manière à les escamoter afin de permettre d'atteindre la ligne de sélection de la marche arrière AR.

Les moyens de butée situés au-dessus du point d'articulation 2 consistent en une butée supérieure référencée 4 dans son ensemble qui est montée sur le levier de vitesses 1 et qui coopère avec une rampe supérieure 6 aménagée dans le boîtier 7. Une gâchette 12 est montée sur la partie supérieure du levier de vitesses 1. Cette gâchette 12 est en matière plastique et elle forme une pièce monobloc avec un corps 13 de forme cylindrique. La butée supérieure 4 est constituée par ce corps 13 qui a une gorge 14 dans laquelle est logé un élément torique 15 en élastomère.

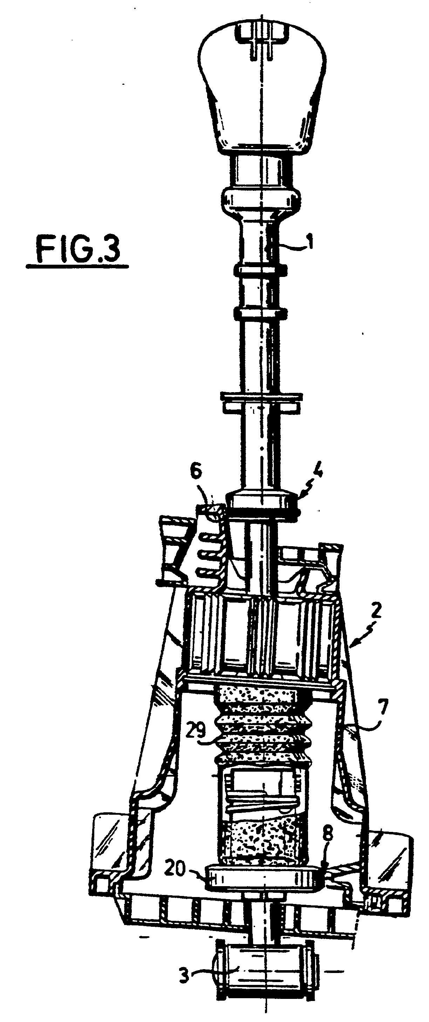

L'élément torique 15 vient buter contre la rampe supérieure 6 comme cela est représenté sur la figure 3 afin d'obtenir la ligne de sélection 1-2.

Les moyens de butée situés au-dessous du point d'articulation 2 consistent en une butée inférieure référencée 5 dans son ensemble qui est montée sur la partie inférieure du levier de vitesses 1 et qui coopère avec une rampe inférieure 8 aménagée dans le boîtier 7. Cette butée inférieure 5 est constituée d'un corps cylindrique référencé 19 dans son ensemble et d'un anneau 20.

Le corps 19 est formé par deux éléments 26 et 27 en matière plastique qui se clipsent l'un dans l'autre.

Ces deux éléments 26 et 27 ont une gorge 28 dans laquelle vient se loger l'anneau 20 en élastomère.

La butée inférieure 5 est liée à la butée supérieure 4 par un câble 9. L'extrémité supérieure 17 du câble 9 vient se fixer sur un crochet 16 solidaire du corps 13. L'extrémité inférieure 18 du câble 9 vient s'amarrer dans le corps cylindrique 19.

Le point d'articulation 2 est constitué essentiellement par un support 10 qui se monte sur une excroissance du levier de vitesses 1 prévue à cet effet ; ce support 10 recevant à son tour une rotule 11. Cette rotule 11 vient dans un logement sphérique tenu par un tampon filtrant 30 qui est maintenu dans un logement du boîtier 7 par un anneau d'arrêt 31. Le câble 9 traverse le support 10.

L'ensemble de la butée supérieure 4 et de la butée inférieure 5 est manoeuvré en translation le long du levier de vitesses 1 par la gâchette 12. Cet ensemble est rappelé en position initiale par un système élastique aménagé sur la butée inférieure 5. Ces deux mouvements de translation sont guidés et limités par des moyens de fin de course.

Les moyens élastiques sont constitués par un ressort de compression 21 qui se monte autour du corps cylindrique 19. Ce ressort de compression 21 s'appuie à sa partie inférieure sur l'anneau 20 et à sa partie supérieure sur une goupille 22 montée dans le levier de vitesses 1. Cette goupille 22 coulisse librement dans le sens axial dans deux lumières 23 qui sont aménagées dans le corps cylindrique 19 et qui sont diamétralement opposées ; ce qui permet de guider le corps cylindrique 19 en translation ; c'est-à-dire la butée inférieure 5.

Les moyens de fin de course sont assurés par une goupille de liaison 24 qui est montée dans le levier de vitesses 1 et qui permet la liaison de ce levier de vitesses 1 avec la gâchette 12, c'est-à-dire avec la butée supérieure 4.

La goupille de liaison 24 coulisse dans deux lumières 25, qui sont aménagées dans la gâchette 12 et sont diamétralement opposées ; ce qui permet de guider la gâchette 12 en translation c'est-à-dire la butée supérieure 4. La longueur de ces lumières 25 est déterminée de façon à donner les deux fins de course de l'ensemble des deux butées 4 et 5 ; c'est-à-dire les positions haute et basse.

En position basse, il n'y a pas d'action manuelle sur la gâchette 12, l'élément torique 15 est en butée contre la rampe supérieure 6 et l'anneau 20 est en butée contre la rampe inférieure 8 ; on est alors sur la ligne de sélection 1-2.

En position haute, l'élément torique 15 et l'anneau 20 sont escamotés et c'est le levier de vitesses 1 qui vient buter contre la rampe supérieure 6 afin d'avoir la ligne de sélection de marche arrière.

L'ensemble des pièces situées au-dessous du point d'articulation est muni d'un soufflet de protection 29 qui vient se monter, d'une part, sur la partie inférieure du corps cylindrique 19 avec sa gorge 28 sur laquelle vient se monter l'anneau 20 en élastomère et, d'autre part, entre le tampon filtrant 30 du point d'articulation 2 et l'anneau d'arrêt 31 de l'ensemble de ladite articulation dans le boîtier 7 du levier de vitesses 1.

## Revendications

1. Dispositif de commande manuelle des rapports d'une boîte de vitesses mécanique comportant un levier de vitesses (1) à actionnement manuel muni d'un point d'articulation fixe (2), les positions respectives de chaque vitesse étant agencées de manière que la ligne de sélection de marche arrière soit à côté de la ligne de sélection du premier et du deuxième rapport ; ledit levier de vitesses (1) actionnant une seule bielle de commande (3) pour la sélection et le passage des différents rapports ; caractérisé en ce que le pilotage de la ligne de sélection du premier et du deuxième rapport est effectué par des moyens de butée (4) situés au-dessus du point d'articulation (2) et par des moyens de butée (5) situées au-dessous du point d'articulation (2), lesdits moyens étant liés par l'intermédiaire d'un système de commande en translation le long du levier de vitesses (1) de manière à escamoter lesdits moyens de butée pour permettre d'atteindre la ligne de sélection de la marche arrière.

2. Dispositif de commande manuelle selon la revendication 1 caractérisé en ce que :
— les moyens de butée situés au-dessus du point d'articulation (2) consistent en une butée supérieure (4) montée sur le levier de vitesses (1) qui coopère avec une rampe supérieure (6) solidaire du boîtier (7) ;
— les moyens de butée situés au-dessous du point d'articulation (2) consistent en une butée inférieure (5) montée sur le levier de vitesses (1) qui coopère avec une rampe inférieure (8) solidaire du boîtier (7) ;
— la butée inférieure (5) étant liée à la butée supérieure (4) par un câble (9) traversant le support (10) de rotule (11) du point d'articulation (2) ; l'ensemble étant manoeuvré en translation le long du levier de vitesses (1) par une gâchette (12) solidaire de ladite butée supérieure (4), et étant rappelé en position initiale par un système élastique aménagé sur la butée inférieure (5), les deux mouvements de translation étant guidés et limités par des moyens de fin de course.

3. Dispositif de commande manuelle selon la revendication 2 caractérisé en ce que la butée supérieure (4) est constituée par un corps (13) solidaire de la gâchette (12), ledit corps (13) ayant une gorge (14) dans laquelle est logé un élément torique (15) en élastomère, qui vient buter contre la rampe supérieure (6) ledit corps (13) portant un crochet (16) sur lequel vient se fixer l'extrémité supérieure (17) du câble (9).

4. Dispositif de commande manuelle selon la revendication 2 caractérisé en ce que la butée inférieure (5) est constituée d'un corps cylindrique (19) qui porte un anneau (20), l'extrémité inférieure (18) du câble (9) venant s'amarrer dans ledit corps cylindrique (19) les moyens élastiques étant constitués par un ressort de compression (21), qui est monté autour dudit corps cylindrique (19) et qui s'appuie, d'une part, sur ledit anneau (20) et, d'autre part, sur une goupille (22) montée dans le levier de vitesses (1) et coulissant dans deux lumières (23) aménagées dans le corps cylindrique (19) et diamétralement opposées, afin de guider le corps cylindrique (19) en translation.

5. Dispositif de commande manuelle selon la revendication 3 caractérisé en ce que les moyens de fin de course sont assurés par une goupille de liaison (24) de la gâchette (12) avec le levier de vitesses (1), ladite goupille de liaison (24) étant montée dans ledit levier de vitesses (1) et coulissant dans deux lumières (25) aménagées dans ladite gâchette (12) et diamétralement opposées afin de guider en translation la butée supérieure (4).

6. Dispositif de commande manuelle selon la revendication 5 caractérisé en ce que le corps (13) et la gâchette (12) forment une pièce monobloc en matière plastique.

7. Dispositif de commande manuelle selon la revendication 4 caractérisé en ce que le corps cylindrique (19) de la butée inférieure (5) est constitué de deux éléments (26) et (27) en matière plastique qui se clipsent l'un dans l'autre, l'ensemble des deux éléments (26) et (27) étant tenu par l'anneau (20) en élastomère qui vient se loger dans une gorge (28) prévue à cet effet dans lesdits deux éléments (26) et (27).

8. Dispositif de commande manuelle selon la revendication 7 caractérisé en ce que l'ensemble des pièces situées au-dessous du point d'articulation est muni d'un soufflet de protection (29) qui vient se monter, d'une part, sur la partie inférieure du corps cylindrique (19) avec sa gorge (28) sur laquelle vient se monter l'anneau (20) en élastomère et, d'autre part, entre un tampon filtrant (30) associé au point d'articulation (2) et un anneau d'arrêt (31) de l'ensemble de ladite articulation dans le boîtier (7) du levier de vitesses (1).

## Claims

1. An arrangement for the manual control of the gears of a mechanical gearbox comprising a manually actuated gear lever (1) provided with a fixed pivot mounting point (2), the respective positions of each gear being arranged in such a way that the reverse gear selection line is beside the selection line in respect of the first and second gears ; said gear lever (1) actuating a single control rod (3) for selection and shifting of the different gears ; characterised in that pilot control in respect of the selection line for the first and second gears is effected by abutment means (4) disposed above the pivot mounting point (2) and abutment means (5) disposed below the pivot mounting point (2), said means being connected by way of a control system involving translatory movement along the gear lever (1) in such a way as to retract said abutment means to permit the reverse gear selection line to be attained.

2. A manual control arrangement according to claim 1 characterised in that :

— the abutment means disposed above the pivot mounting point (2) consist of an upper abutment (4) mounted on the gear lever (1), which co-operates with an upper ramp (6) which is fixed with respect to the casing (7) ;

— the abutment means disposed below the pivot mounting point (2) consist of a lower abutment (5) mounted on the gear lever (1), which co-operates with a lower ramp (8) which is fixed with respect to the casing (7) ;

— the lower abutment (5) being connected to the upper abutment (4) by a cable (9) which passes through the ball joint (11) support (10) of the pivot mounting point (2) ; the assembly being operated in respect of translatory movement along the gear lever (1) by a catch (12) which is fixed with respect to said upper abutment (4) and being returned to the initial position by a resilient system provided on the lower abutment (5), the two translatory movements being guided and limited by end-of-travel means.

3. A manual control arrangement according to claim 2 characterised in that the upper abutment (4) is formed by a body (13) which is fixed with respect to the catch (12), said body (13) having a groove (14) in which there is accommodated a toric element (15) of elastomer material, which comes to bear against the upper ramp (6), said body (13) bearing a hook (16) on to which the upper end (17) of the cable (9) is fixed.

4. A manual control arrangement according to claim 2 characterised in that the lower abutment (5) is formed by a cylindrical body (19) which carries a ring (20), the lower end (18) of the cable (9) being fastened in said cylindrical body (19), the resilient means being formed by a compression spring (21) which is mounted around said cylindrical body (19) and which bears on the one hand against said ring (20) and on the other hand against a pin (22) mounted in the gear lever (1) and slidable in two openings (23) provided in the cylindrical body (19) and in diametrally opposite relationship, in order to guide the cylindrical body (19) in respect of translatory movement.

5. A manual control arrangement according to claim 3 characterised in that the end-of-travel means are provided by a pin (24) for connecting the catch (12) to the gear lever (1), the connecting pin (24) being mounted in said gear lever (1) and being slidable in two openings (25) provided in said catch (12) and in diametrally opposite relationship, in order to guide the upper abutment (4) in respect of translatory movement.

6. A manual control arrangement according to claim 5 characterised in that the body (13) and the catch (12) form a unitary component of plastics material.

7. A manual control arrangement according to claim 4 characterised in that the cylindrical body (19) of the lower abutment (5) is formed by two elements (26) and (27) of plastics material, which clip one into the other, the assembly of the two elements (26) and (27) being held by the ring (20) of elastomer material, which is accommodated in a groove (28) provided for that purpose in said two elements (26) and (27).

8. A manual control arrangement according to claim 7 characterised in that the assembly of the components disposed below the pivot mounting point is provided with a protective bellows (29) which is fitted on the one hand on the lower part of the cylindrical body (19) with its groove (28) on which the ring (20) of elastomer material is mounted and on the other hand between a filtering insulator (30) associated with the pivot mounting point (2) and a stop ring (31) of the assembly of said pivot mounting in the casing (7) for the gear lever (1).

**Patentansprüche**

1. Handbetätigte Steuervorrichtung für den Gangwechsel eines mechanischen Getriebes, mit einem manuell betätigbaren Schalthebel (1), der mit einem festen Gelenkpunkt (2) versehen ist und mit einer derartigen Anordnung der einzelnen Gänge, daß der Schaltweg für den Rückwärtsgang neben dem Schaltweg für den ersten und den zweiten Gang liegt, wobei der Ganghebel (1) eine einzige Schaltstange zur Anwahl und zum Einlegen der verschiedenen Gänge betätigt, dadurch gekennzeichnet, daß die Ansteuerung des Schaltweges für den ersten und zweiten Gang durch Anschläge (4) erfolgt, die oberhalb des Gelenkpunktes (2) angeordnet sind und durch Anschläge (5) erfolgt, die unterhalb des Gelenkpunktes (2) angeordnet sind, wobei die Anschläge über eine Schiebesteueranordnung entlang des Schalthebels (1) derart miteinander verbunden sind, daß die Anschläge zum Erreichen des Schaltweges für den Rückwärtsgang eingezogen werden.

2. Handbetätigte Steuervorrichtung nach Anspruch 1, dadurch gekennzeichnet, daß

— die oberhalb des Gelenkpunktes (2) angeordneten Anschläge aus einem oberen am Schalthebel (1) angeordneten Anschlag (4) bestehen der mit einem oberen fest mit einem Gehäuse (7) verbundenen Gleitstück (6) zusammenwirkt;

— die unterhalb des Gelenkpunktes (2) angeordneten Anschläge aus einem unteren am Schalthebel (1) angeordneten Anschlag bestehen der mit einem unteren fest mit dem Gehäuse (7) verbunden Gleitstück (8) zusammenwirkt;

— der untere Anschlag (5) mit dem oberen Anschlag (4) über ein Kabel (9) verbunden ist, daß die Halterung (10) eines Kugelgelenks (11) des Gelenkpunktes (2) durchsetzt; die Anordnung kann entlang des Schalthebels (1) durch eine Zuhaltung (12) verschoben werden, die mit dem oberen Anschlag (4) fest verbunden ist und in ihre Ursprungsstellung durch eine elastische Anordnung rückholbar ist, die am unteren Anschlag (5) vorgesehen ist, wobei die beiden Verschiebebewegungen durch Verschiebebegrenzer geführt und begrenzt sind.

3. Handbetätigte Steuervorrichtung nach Anspruch 2, dadurch gekennzeichnet, daß der obere Anschlag (4) aus einem fest mit der Zuhaltung (12) verbunden Teils (13) besteht, wobei das Teil (13) mit einer Nut (14) versehen ist, in die ein ringförmiges Gummiteil (15) eingreift, das sich auf dem oberen Gleitstück (6) abstützt und wobei das Teil (13) einen Haken (16) trägt, an dem das obere Ende (17) des Kabels (9) befestigt ist.

4. Handbetätigte Steuervorrichtung nach Anspruch 2, dadurch gekennzeichnet, daß der untere Anschlag (5) aus einem zylindrischen Teil (19) besteht, das einen Ring (20) trägt, wobei das untere Ende (18) des Kabels (9) im zylindrischen Teil (19) befestigt ist und die elastische Anordnung aus einer Druckfeder (21) besteht, welche um das zylindrische Teil (19) herum angeordnet ist und sich einerseits am Ring (20) abstützt und andererseits an einem Stift (22), der im Schalthebel (1) angeordnet ist und in zwei Öffnungen (23) gleiten kann, die sich diametral gegenüberliegend im zylindrischen Teil (19) vorgesehen sind, um so eine Verschiebeführung des zylindrischen Teil (19) zu gewährleisten.

5. Handbetätigte Steuervorrichtung nach Anspruch 3, dadurch gekennzeichnet, daß die Verschiebebegrenzer aus einem Stift (24) zur Verbindung der Zuhaltung (12) mit dem Schalthebel (1) besteht, wobei dieser Verbindungsstift (24) im Schalthebel (1) gelagert ist und in zwei sich diametral gegenüberliegenden Öffnungen in der Zuhaltung (12) gleiten kann, um die Verschiebeführung des oberen Anschlags (4) zu gewährleisten.

6. Handbetätigte Steuervorrichtung nach Anspruch 5, dadurch gekennzeichnet, daß das Teil (13) und die Zuhaltung (12) ein aus Kunststoff bestehendes einstückiges Bauteil bildet.

7. Handbetätigte Steuervorrichtung nach Anspruch 4, dadurch gekennzeichnet, daß das zylindrische Teil (19) des unteren Anschlags (5) aus zwei Bauteilen (26) und (27) aus Kunststoff besteht, die ineinander eingreifen, wobei die Anordnung aus diesen beiden Bauteilen (26) und (27) durch den Gummiring (20) zusammengehalten wird, welcher in eine zu diesem Zweck in den beiden Bauteilen (26) und (27) vorgesehene Nut (28) eingreift.

8. Handbetätigte Steuervorrichtung nach Anspruch 7, dadurch gekennzeichnet, daß die Einheit der unterhalb des Gelenkpunktes angeordneten Bauteile mit einem Schutzbalg (29) versehen ist, der einerseits am unteren Abschnitt des zylindrischen Teils (19) mit der Nut (28) befestigt ist, in welche der Gummiring (20) eingreift und andererseits zwischen einem Filterpuffer (30), der dem Gelenkpunkt (2) zugeordnet ist und einem Haltering (31) für die Anordnung des Gelenkes im Gehäuse (7) des Schalthebels (1) befestigt ist.

AR

I

III

II

V

IV

30

2

7

3

37

33

36

34

38

35

32

FIG.1

FIG.2

EP 0 285 508 B1

## FIG.3